# EUROPEAN PATENT APPLICATION

(11) **EP 4 800 819 A1**
(43) Date of publication of application: **02.09.2026**
(21) Application number: 25864496.2
(22) Date of filing: 25.06.2025
(51) Int. Cl.: H01M 50/167, B21D 51/26

(54) **BATTERY CELL PROCESSING APPARATUS AND PROCESSING METHOD, BATTERY CELL, BATTERY PACK, AND VEHICLE**

(30) Priority: 20.11.2024 KR 20240166141
(71) Applicant: LG ENERGY SOLUTION, LTD., Seoul 07335 (KR)
(72) Inventor: OH, Donghyun, Daejeon 34122 (KR); PARK, Kyeonghoon, Daejeon 34122 (KR); LEE, Jejun, Daejeon 34122 (KR)
(74) Representative: Goddar, Heinz J.
(86) International application number: PCT/KR2025/008847
(87) International publication number: WO 2026/111077

(57) **Abstract**

A battery cell processing device includes a shape guide configured to be inserted into a cell case through an open upper portion of the cell case to guide formation of a beading portion and a beading knife introduced from the outside of the cell case toward a side of the cell case to form the beading portion. In the process in which a portion of the side of the cell case is introduced into the inside of the cell case by the beading knife, the shape guide guides the introduction of the cell case.

## Description

### [Technical Field]

The present disclosure relates to a battery cell processing device and processing method, and more particularly, to a battery cell processing device and processing method for processing a beading portion of a cylindrical cell, and to a battery cell, a battery pack, and a vehicle.

### [Background Art]

Unlike primary batteries that cannot be recharged, secondary batteries refer to batteries that may be charged and discharged and have been applied not only to portable devices but also to electric vehicles (EVs) and hybrid electric vehicles (HEVs) that are driven by an electric drive source.

The types of secondary batteries that are currently widely used include lithium ion batteries, lithium polymer batteries, nickel cadmium batteries, nickel hydrogen batteries, nickel zinc batteries, etc. An operating voltage of these unit secondary battery cells (unit battery cells) is about 2.5 V to 4.6 V. Therefore, if a higher output voltage is required, a battery pack may be configured by connecting a plurality of battery cells in series. In addition, a battery pack may be configured by connecting a plurality of battery cells in parallel depending on a charge and discharge capacity required for the battery pack. The number of battery cells included in a battery pack may be set to vary depending on the required output voltage or charge/discharge capacity.

Battery cells may be classified into pouch-type, cylindrical, and prismatic types depending on the shape of the case.

Among these, cylindrical cells are mainly formed of a metal case with a cylindrical structure, so they are safe, accommodate a jelly roll-shaped electrode assembly inside the case, and have the advantage of high energy density and facilitating connection of a plurality of cells in series or parallel to form a large-capacity power storage device.

These cylindrical cells are manufactured by inserting an electrode assembly into a cell case, forming a beading portion above the electrode assembly in the cell case, seating a top cap with a gasket mounted thereon in the beading portion, and then forming a crimping portion to secure a cap assembly to an upper portion of the cell case.

A current collecting plate may be seated and welded to an upper portion of the beading portion inside the cell case, but in order for the welding to be performed properly, a flat portion has to be formed on the beading portion. If the flat portion is not formed according to a design value, a welding portion of the current collecting plate may be lifted or weakly welded, which may lead to a defect.

However, according to the related art, a beading process for forming the beading portion is performed by pushing a knife into the side of the cell case rotating at high speed to deform it, so there may be cases in which the beading portion is not formed according to the design value.

### [Disclosure]

### [Technical Problem]

The present disclosure provides a battery cell processing device and processing method capable of properly forming a flat portion of a beading portion according to a design value, and a battery cell, a battery pack, and a vehicle.

### [Technical Solution]

According to an embodiment of the present disclosure, a battery cell processing device includes a shape guide configured to be inserted into a cell case through an open upper portion of the cell case to guide formation of a beading portion and a beading knife configured to be moved toward a side of the cell case to form the beading portion, wherein, during formation of the beading portion in which a portion of the side of the cell case is moved inward by the beading knife, the shape guide guides the movement of the side of the cell case.

The battery cell processing device may further include an upper holder configured to support the upper portion of the cell case, wherein the upper holder includes the shape guide.

The upper holder may be configured to rotatably support the upper portion of the cell case.

The battery cell processing device may further include a lower holder configured to support a lower portion of the cell case.

The lower holder may be configured to rotate the cell case such that the cell case rotates with the lower holder.

The shape guide may be configured to form a flat portion on an upper surface of the beading portion and a curved portion between an inner surface of the cell case and the flat portion.

The shape guide may include a cylindrical guide body extending from a lower portion of an upper holder, the cylindrical guide body having an outer surface contacting the inner surface of the cell case, and a flat guide portion on a lower surface of the cylindrical guide body, the flat guide portion being configured to form the flat portion of the beading portion.

The shape guide may further include a curved guide portion between the flat guide portion and the outer surface of the cylindrical guide body, the curved guide portion being configured to form the curved portion of the beading portion.

The shape guide may be configured to be lifted and lowered.

The shape guide may further includes a case insertion recess may be formed in the outer surface of the shape guide below the upper holder, the case insertion recess being configured to receive the upper portion of the cell case.

The outer surface of the cylindrical guide body of the shape guide may include an inclined surface to minimize contact between the outer surface of the cylindrical guide body and the inner surface of the cell case.

According to an embodiment of the present disclosure, a battery cell processing method includes inserting a shape guide through an open upper portion of a cell to position the shape guide in a forming position of a beading portion and moving a beading knife, while rotating the cell case, to press a portion of a side of the cell case inward to form the beading portion, wherein, in the process of pressing a portion of the side of the cell case with the beading knife, a portion of the cell case located above a pressing portion of the beading knife is deformed by the shape guide such that a flat portion is formed in an upper portion of the beading portion. A curved portion may be formed between an inner surface of the cell case and the flat portion by the shape guide.

According to another embodiment of the present disclosure, a battery cell may be manufactured by the battery cell processing device. A battery pack may include the battery cell, and a vehicle may include the battery pack.

### [Advantageous Effects]

According to the battery cell processing device and processing method, and the battery cell, the battery pack, and the vehicle of the present disclosure, a shape guide for forming the beading portion is disposed inside the cell case, and the beading portion is formed using a beading knife outside the cell case, so that the beading portion may be formed according to the design value. In particular, since a flat portion in the shape of a plane may be formed properly according to the design value on an upper surface of the beading portion, the welding quality between the beading portion and the current collecting plate may be maintained properly.

### [Description of Drawings]

FIG. 1 is a view illustrating a vehicle equipped with a battery pack.
FIG. 2 is a view illustrating a plurality of battery cells built into a battery pack.
FIG. 3 is a perspective view of a cylindrical battery cell shown in FIG. 2.
FIG. 4 is a cross-sectional view illustrating an internal structure of a cylindrical battery cell.
FIG. 5 is a cross-sectional view illustrating a first current collecting plate being seated and welded to the beading portion.
FIG. 6 is a view illustrating a state in which a cell case is fixed to a battery cell manufacturing device and a beading portion is then formed according to an embodiment of the present disclosure.
FIG. 7 is a view illustrating a process in which a beading knife pushes the side of a cell case to form a beading portion.
FIG. 8 is an enlarged view of detail A of FIG. 7.
FIG. 9 is a view illustrating various cross-sectional shapes of shape guides shown in FIGS. 7 and 8.
FIG. 10 is a flow chart illustrating a process of forming a beading portion in a battery cell by a battery cell processing method according to an embodiment of the present disclosure.

### [Mode for Disclosure]

Hereinafter, a battery cell processing device and processing method, a battery cell, a battery pack, and a vehicle according to an embodiment of the present disclosure will be described in detail with reference to the accompanying drawings.

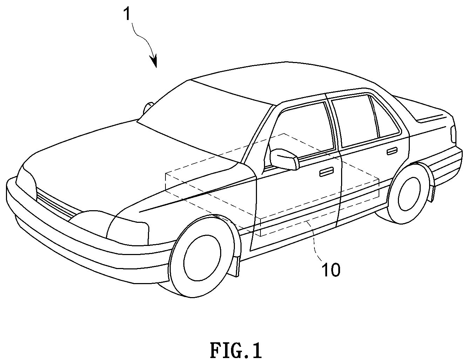

FIG. 1 is a view illustrating a vehicle equipped with a battery pack.

A vehicle 1, such as an electric vehicle or a hybrid vehicle, may be equipped with one or a plurality of battery packs 10. The battery pack 10 may supply electric energy required for various operations of the vehicle 1. In addition, the vehicle 1 may further include various other components in addition to the battery pack 10. For example, the vehicle 1 may further include a vehicle body, a motor, a control device, such as an electronic control unit (ECU), etc.

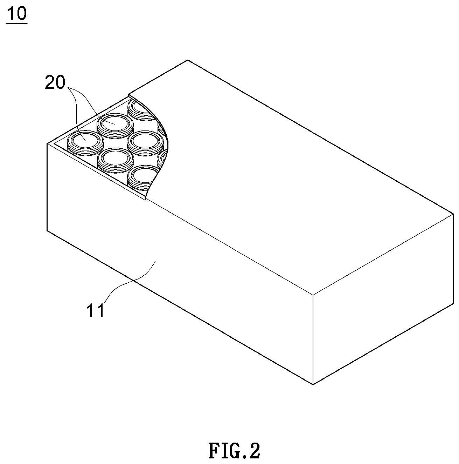

FIG. 2 is a view illustrating a battery pack having a plurality of battery cells built therein.

The battery pack 10 according to an embodiment of the present disclosure may include a pack case 11 and a plurality of battery cells 20. The pack case 11 accommodates the plurality of battery cells 20 and may include a bottom plate, a side plate, and a top plate. The battery cell 20 may be a cylindrical cell.

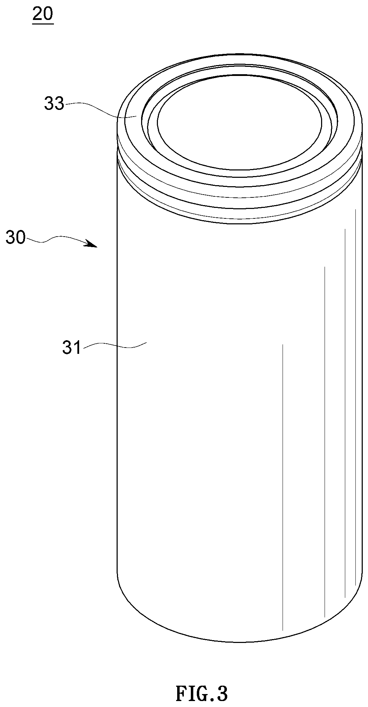

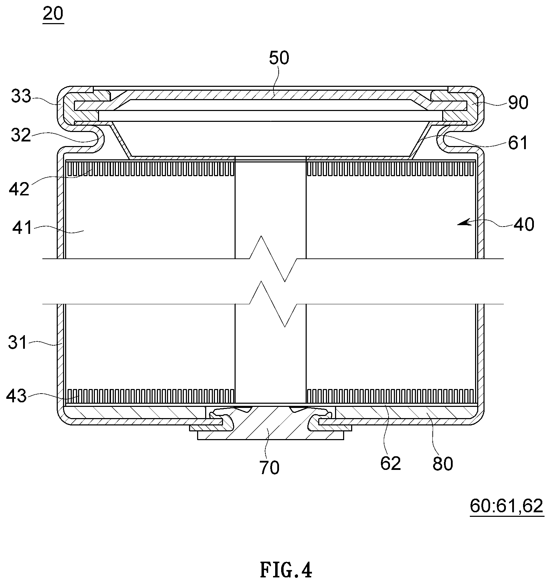

FIG. 3 is a perspective view of the cylindrical battery cell illustrated in FIG. 2, and FIG. 4 is a cross-sectional view illustrating an internal structure of the cylindrical battery cell.

The battery cell 20 may be a cylindrical cell and may include a cell case 30, an electrode assembly 40, a top cap 50, a current collector 60, a terminal 70, and an insulator 80.

The cell case 30 may have an open portion formed on one side, may accommodate the electrode assembly 40 through the open portion, and may also accommodate an electrolyte through the open portion. The cell case 30 may include an electrode accommodation portion 31, a beading portion 32, and a crimping portion 33. The cell case 30 may be electrically connected to either one of positive and negative electrodes constituting the electrode assembly 40 and may be formed of a conductive material so that current may flow.

The electrode accommodation portion 31 accommodates the electrode assembly 40 therein. The beading portion 32 is formed to extend from an upper end of the electrode accommodation portion 31 and is formed in a form in which a side surface of the cell case 30 adjacent to the open portion is pressed to a predetermined depth to prevent the electrode assembly 40 from slipping out toward the open portion. The crimping portion 33 may be formed to extend from an upper portion of the beading portion 32 and may have a bent form to surround the edge region of the top cap 50. The top cap 50 may be fixed on the beading portion 32 by the shape of the crimping portion 33.

The electrode assembly 40 may include a cell body portion 41 and uncoated portions 42 and 43.

The cell body portion 41 is a cylindrical portion wound in a jelly roll type with a separator laminated between a first electrode sheet and a second electrode sheet in a sheet form.

The uncoated portions 42 and 43 are formed at the widthwise end portions of the first electrode sheet and the second electrode sheet, are portions not coated with an active material layer, and may include a first uncoated portion 42 extending from one axial side of the cell body portion 41 and a second uncoated portion 43 extending from the other axial side of the cell body portion 41.

The electrode assembly 40 configured in this manner may be formed by winding the cell body portion 41 around a winding rod and pulling the winding rod out of the cell body portion 41. A hollow core portion may be formed in a space in which the winding rod was pulled out of the cell body portion 41.

The top cap 50 may be fixed by a crimping portion 33 in a state in which a gasket 90 is fitted around the top cap 50 and is seated in an upper portion of the beading portion 32, thereby covering the open portion of the cell case 30, and may be formed of a conductive metal material.

The current collector 60 may include a first current collecting plate 61 having a first polarity and a second current collecting plate 62 having a second polarity. The first current collecting plate 61 may be disposed between the electrode assembly 40 and the top cap 50 to electrically connect the first uncoated portion 42 and the cell case 30. Through this, the cell case 30 may have a first polarity. The second current collecting plate 62 may be disposed between the electrode assembly 40 and the terminal 70 to electrically connect the second uncoated portion 43 and the terminal 70. Through this, the terminal 70 may have a second polarity.

The edge of the first current collecting plate 61 may be seated in the upper portion of the beading portion 32 constituting the cell case 30 and bonded to the beading portion 32 by welding or the like. In order to ensure that the welding of the beading portion 32 and the first current collecting plate 61 is performed properly, a flat portion 34 described below may be formed above the beading portion 32. If the flat portion 34 is not formed according to a design value, the welding area of the first current collecting plate 61 may be lifted or weakly welded, which may lead to a defect. Therefore, it is important to form the flat portion 34 according to the design value during the forming process of the beading portion 32.

The terminal 70 may be provided at the center of a closed portion located opposite the open portion of the cell case 30. The terminal 70 may be exposed to the outside of the cell case 30 through the closed portion and may be electrically connected to the second uncoated portion 43 through the second current collecting plate 62 to have a second polarity.

The insulator 80 is formed of an insulating material and may be provided on the closed portion side of the cell case 30 for insulation between the cell case 30 and the electrode assembly 40. Specifically, the insulator 80 may be interposed between the closed portion of the cell case 30 and the second current collecting plate 62.

Meanwhile, the battery cell 20 having the internal structure illustrated in FIG. 4 is an example of a battery cell manufactured by the battery cell manufacturing device according to the present disclosure, and the structure of the battery cell 20 may be modified variably

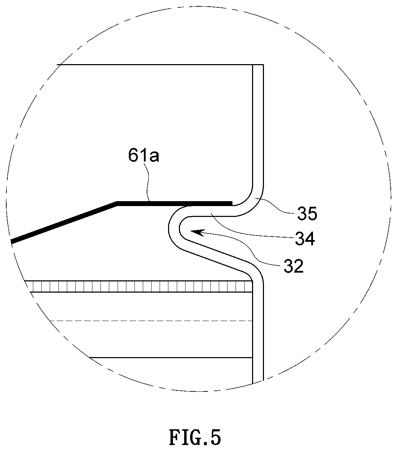

FIG. 5 is a cross-sectional view illustrating the first current collecting plate being seated and welded to the beading portion.

As described above, the first current collecting plate 61 electrically connects the first uncoated portion 42 of the electrode assembly 40 and the cell case 30 and may be provided with a joint portion 61a seated and welded to the upper surface of the beading portion 32 at the edge thereof. The first current collecting plate 61 and the beading portion 32 may be bonded using various known methods other than the welding method.

In order to maintain desirable welding quality between the first current collecting plate 61 and the beading portion 32, the joint portion 61a is formed in a flat shape, and a flat portion 34 in a flat shape welded to the joint portion 61a may be formed on the upper surface of the beading portion 32. A curved portion 35 in a curved shape may be formed between an inner surface of the cell case 30 and the flat portion 34.

For reference, FIG. 5 shows a state in which the electrode assembly 40 is accommodated inside the cell case 30, the beading portion 32 is formed, and the joint portion 61a of the first current collecting plate 61 is welded to the flat portion 34 of the beading portion 32. In a subsequent process, the top cap 50 may be inserted and the crimping portion 33 may be formed through a crimping process.

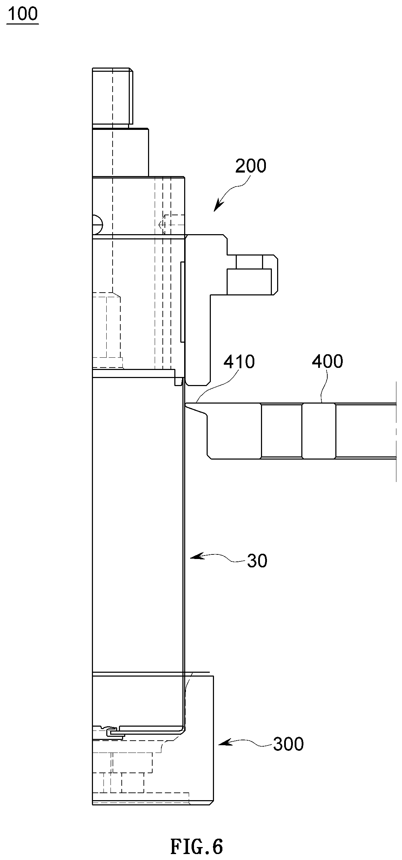

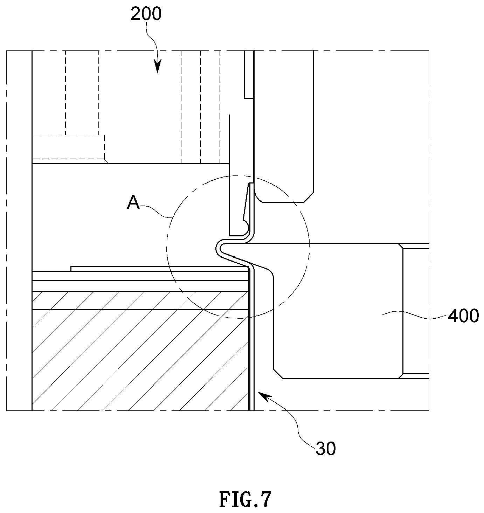

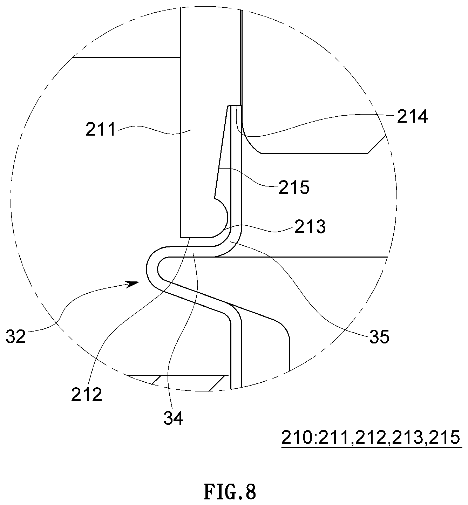

FIG. 6 is a view illustrating a state in which the cell case is fixed to the battery cell manufacturing device according to an embodiment of the present disclosure and then the beading portion is formed. FIG. 7 is a view illustrating a process in which a beading knife pushes the side of the cell case to form the beading portion. FIG. 8 is an enlarged view of detail A of FIG. 7.

A battery cell manufacturing device 100 according to the present disclosure includes an upper holder 200, a lower holder 300, and a beading knife 400.

The upper holder 200 supports an upper portion of the cell case 30 so as to be relatively rotatable, is installed so as to be able to be lifted, and includes a shape guide 210 that guides forming of the beading portion 32. Various known lifting structures may be applied to a lifting structure of the upper holder 200.

The shape guide 210 is inserted into the cell case 30 through the open upper portion of the cell case 30 to guide the forming of the beading portion 32, and includes a guide body 211, a flat guide portion 212, and a curved guide portion 213. The shape guide 210 is lifted and lowered together with the upper holder 200.

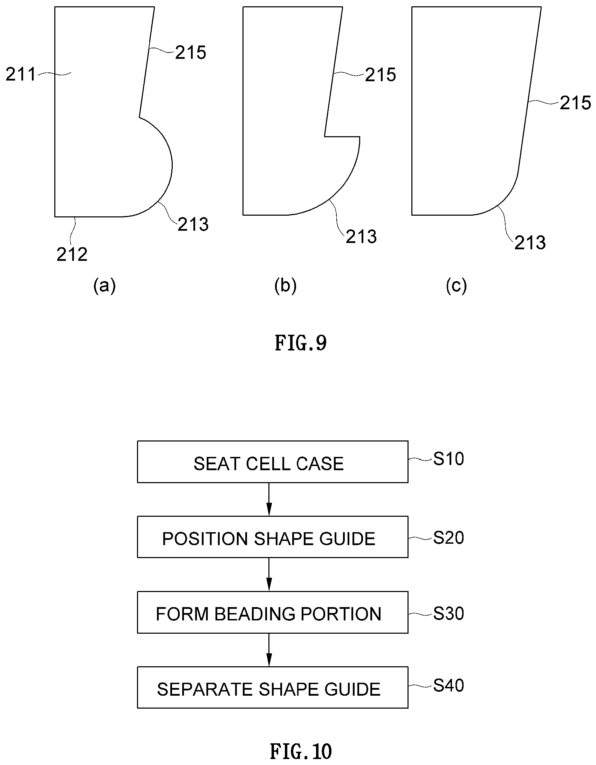

The guide body 211 extends from a lower portion of the upper holder 200 and is formed in a cylindrical shape with an outer surface contacting an inner surface of the cell case 30. The flat guide portion 212 is formed in a flat shape on the lower surface of the guide body 211 to guide the flat portion 34 in a flat shape to be formed on the upper surface of the beading portion 32. The curved guide portion 213 is formed in a curved shape between the flat guide portion 212 and the outer surface of the guide body 211 to guide the curved portion 35 in a curved shape to be formed between the inner surface of the cell case 30 and the flat portion 34. Various embodiments of the shape guide 210 having such a structure are illustrated in FIG. 9.

The lower holder 300 is where the lower portion of the cell case 30 is seated and supported, and a seating recess in which the lower portion of the cell case 30 is inserted and seated may be formed on the upper portion. The lower holder 300 may be rotated by the driving of the motor and may be rotated together with the cell case 30 that is seated and fixed in the upper portion.

The beading knife 400 may be introduced from the outside of the cell case 30 to the side of the cell case 30 to form the beading portion 32 and may be installed so as to be able to move back and forth laterally. A pressing portion 410 that presses the side of the cell case 30 is formed on one side of the beading knife 400, and the pressing portion 410 is formed in a pointed shape toward to the end portion, but an upper surface thereof is flat and a lower surface thereof is formed as an inclined surface.

Due to the upper surface of the pressing portion 410 forming the beading knife 400 and the flat guide portion 212 of the shape guide 210, the flat portion 34 in the form of a flat surface may be formed in the upper portion of the beading portion 32, and the width of the flat portion 34 may vary depending on the width of the pressing portion 410, the degree of pressing of the pressing portion 410, and the width of the flat guide portion 212.

Meanwhile, a case insertion recess 214 into which an upper portion of the cell case 30 is rotatably inserted may be formed on the outer side of the shape guide 210 in a lower portion of the upper holder 200. The cell case 30 may rotate along the outer surface of the shape guide 210 while the upper end thereof is inserted into the case insertion recess 214. That is, the upper end of the cell case 30 may rotate along the outer surface of the shape guide 210, while the upper holder 200 is stopped.

The process of forming the beading portion 32 by the battery cell manufacturing device 100 configured as described above will be further described with reference to the drawings.

As shown in FIG. 6, the lower portion of the cell case 30 is seated and fixed to the lower holder 300, the upper holder 200 may be lowered to insert the shape guide 210 into the cell case 30 through the open upper portion of the cell case 30, and then the beading knife 400 may move toward the side of the cell case 30, thereby starting the forming process of the beading portion 32. The height of the beading knife 400 may be positioned lower than the shape guide 210. A height difference between the shape guide 210 and the beading knife 400 may vary depending on the degree of introduction of the beading knife 400, i.e., the depth of the beading portion 32.

As shown in FIGS. 7 and 8, as the beading knife 400 moves forward, the pressing portion 410 presses the side of the cell case 30 toward the inside of the cell case 30, thereby forming the beading portion 32. In this process, the portion of the side of the cell case 30 located above the pressing portion 410 is deformed while coming into contact with the flat guide portion 212 and the curved guide portion 213 of the shape guide 210. Accordingly, the flat portion 34 in a flat shape and the curved portion 35 in a curved shape may be formed on the upper surface of the beading portion 32 after the forming is completed.

Meanwhile, the lower holder 300 is installed so as to be rotatable in place, and the upper holder 200 may be installed so as to be able to be lifted above the lower holder 300.

FIG. 9 is a view illustrating various cross-sectional shapes of the shape guides shown in FIGS. 7 and 8.

The outer surface of the guide body 211 constituting the shape guide 210 may guide the upper portion of the cell case 30 to be easily inserted into the case insertion recess 214, and an inclined surface 215 may be formed in various shapes to minimize contact between the outer surface of the guide body 211 and the inner surface of the cell case 30.

In the case of (a) and (b) of FIG. 9, a step is formed between the inclined surface 215 and the curved guide portion 213, and in the case of (c) of FIG. 9, the inclined surface 215 and the curved guide portion 213 are connected without a step. In all of (a) to (c) of FIG. 9, the inclined surface 215 may not contact the inner surface of the cell case 30 or the contact may be minimized.

FIG. 10 is a flow chart illustrating a process of forming a beading portion in a battery cell by a battery cell processing method according to an embodiment of the present disclosure.

The battery cell processing method according to an embodiment of the present disclosure may include a cell case seating operation (S10), a shape guide positioning operation (S20), a beading portion forming operation (S30), and a shape guide separation operation (S40).

In the cell case seating operation (S10), the lower portion of the cell case 30 into which the electrode assembly 40 is inserted is seated and fixed in the seating recess of the lower holder 300. The cell case 30 may rotate together with the lower holder 300 while being seated in the lower holder 300.

In the shape guide positioning operation (S20), the upper holder 200 is lowered and the shape guide 210 is inserted through the open upper portion of the cell case 30 and positioned in a forming position of the beading portion 32. In this process, the open upper portion of the cell case 30 is fitted to the outside of the shape guide 210 and the upper end is inserted into the case insertion recess 214. The upper holder 200 is maintained in a fixed state, and the cell case 30 may rotate along the outer side of the shape guide 210.

In the beading portion forming operation (S30), the cell case 30 is also rotated together, while the lower holder 300 is rotated. In the process, the beading knife 400 is advanced to press a portion of the side of the cell case 30 toward the inside of the cell case 30. In the process of pressing the side of the cell case 30 with the beading knife 400, a portion of the cell case 30 located above the pressing portion 410 of the beading knife 400 is deformed by contact with the upper surface of the pressing portion 410 and the lower surface of the shape guide 210, so that the flat portion 34 and the curved portion 35 may be formed in the upper portion of the beading portion 32. As the forward movement of the beading knife 400 is completed, the forming of the beading portion 32 is completed.

In the shape guide separation operation (S40), after the beading portion 32 is formed, the lower holder 300 is stopped and the upper holder 200 is lifted to separate the shape guide 210 from the cell case 30. In addition, the beading knife 400 is moved backward so as to be separated from the cell case 30.

As described above, the battery cell processing device and processing method, and the battery cell, battery pack, and vehicle according to the embodiments of the present disclosure have been described in detail with reference to the accompanying drawings, but the present disclosure is not limited to the above-described embodiments and may be implemented variously within the scope of the claims.

### [Detailed Description of Main Elements]

| | | | |
|---|---|---|---|
| 1: | vehicle | 10: | battery pack |
| 11: | pack case | 20: | battery cell |
| 30: | cell case | 31: | electrode accommodation portion |
| 32: | beading portion | 33: | crimping portion |
| 34: | flat portion | 35: | curved portion |
| 40: | electrode assembly | 41: | cell body portion |
| 42: | first uncoated portion | 43: | second uncoated portion |
| 50: | top cap | 60: | current collector |
| 61: | first current collecting plate | 62: | second current collecting plate |
| 70: | terminal | 80: | insulator |
| 90: | gasket | 100: | battery cell manufacturing device |
| 200: | upper holder | 210: | shape guide |
| 211: | guide body | 212: | flat guide portion |
| 213: | curved guide portion | 214: | case insertion recess |
| 215: | inclined surface | 300: | lower holder |
| 400: | beading knife | 410: | pressing portion |

## Claims

1. A battery cell processing device comprising:
a shape guide configured to be inserted into a cell case through an open upper portion of the cell case to guide formation of a beading portion; and
a beading knife configured to be moved toward a side of the cell case to form the beading portion,
wherein, during formation of the beading portion in which a portion of the side of the cell case is moved inward by the beading knife, the shape guide guides the movement of the side of the cell case.

2. The battery cell processing device of claim 1, further comprising an upper holder configured to support the upper portion of the cell case,
wherein the upper holder includes the shape guide.

3. The battery cell processing device of claim 2, wherein the upper holder is configured to rotatably support the upper portion of the cell case.

4. The battery cell processing device of claim 3, further comprising a lower holder configured to support a lower portion of the cell case.

5. The battery cell processing device of claim 4, wherein the lower holder is configured to rotate the cell case such that the cell case rotates with the lower holder.

6. The battery cell processing device of claim 1, wherein the shape guide is configured to form a flat portion on an upper surface of the beading portion and a curved portion between an inner surface of the cell case and the flat portion.

7. The battery cell processing device of claim 6, wherein the shape guide includes:
a cylindrical guide body extending from a lower portion of an upper holder, the cylindrical guide body having an outer surface configured to contact the inner surface of the cell case; and
a flat guide portion on a lower surface of the cylindrical guide body, the flat guide portion being configured to form the flat portion of the beading portion.

8. The battery cell processing device of claim 7, wherein the shape guide further includes a curved guide portion between the flat guide portion and the outer surface of the cylindrical guide body, the curved guide portion being configured to form the curved portion of the beading portion.

9. The battery cell processing device of claim 1, wherein the shape guide is configured to be lifted and lowered.

10. The battery cell processing device of claim 7, wherein the shape guide further includes a case insertion recess in the outer surface of the shape guide below the upper holder, the case insertion recess being configured to receive the upper portion of the cell case.

11. The battery cell processing device of claim 10, wherein the outer surface of the cylindrical guide body includes an inclined surface to minimize contact between the outer surface of the cylindrical guide body and the inner surface of the cell case.

12. A battery cell processing method comprising:
inserting a shape guide through an open upper portion of a cell case to position the shape guide in a forming position of a beading portion; and
moving a beading knife, while rotating the cell case, to press a portion of a side of the cell case inward to form the beading portion,
wherein, in the process of pressing the portion of the side of the cell case with the beading knife, a portion of the cell case located above a pressing portion of the beading knife is deformed by the shape guide such that a flat portion in is formed in an upper portion of the beading portion.

13. The battery cell processing method of claim 12, wherein a curved portion is formed between an inner surface of the cell case and the flat portion by the shape guide.

14. A battery cell manufactured by the battery cell processing device of claim 1.

15. A battery pack comprising the battery cell of claim 14.

16. A vehicle comprising the battery pack of claim 15.
